# EUROPÄISCHE PATENTSCHRIFT

(11) **EP 1 727 640 B1**
(45) Veröffentlichungstag und Bekanntmachung des Hinweises auf die Patenterteilung: **10.09.2008**
(21) Anmeldenummer: 04719423.8
(22) Anmeldetag: 11.03.2004
(51) Int. Cl.: B23K 1/015, B23K 3/04, F27B 17/00, F27D 7/02, B23K 1/008

(54) **VERFAHREN UND VORRICHTUNG FÜR DAS LÖTEN MIT UNTERDRUCK IN DER DAMPFPHASE**
PROCESS AND DEVICE FOR SOLDERING WITH A VACUUM IN THE VAPOUR PHASE
PROCEDE ET DISPOSITIF POUR SOUDER AVEC UNE DEPRESSION EN PHASE VAPEUR

(43) Veröffentlichungstag der Anmeldung: 06.12.2006
(73) Patentinhaber: IBL Löttechnik GmbH, 86343 Königsbrunn b. Agb. (DE)
(72) Erfinder: LEICHT, Helmut W., 86343 Königsbrunn b. Agb. (DE)
(74) Vertreter: Vossius & Partner
(86) Internationale Anmeldenummer: PCT/EP2004/002538
(87) Internationale Veröffentlichungsnummer: WO 2005/087422

(56) Entgegenhaltungen:
- DE-C- 19 911 887
- US-A- 3 460 816
- US-A- 4 077 467
- US-A- 4 392 049
- US-A- 4 558 524
- US-A- 4 838 476
- US-A- 4 860 942

## Beschreibung

Die Erfindung betrifft ein Verfahren und eine Vorrichtung für das Löten in der Dampfphase gemäß dem Oberbegriff den Ansprüche 1 und 16 (siehe z.B., US-A-4 838 476 für Anspruch 1 and DE 199 11 887 C für Anspruch 16).

Beim Löten und insbesondere beim Reflow-Löten mit Weichloten kann es zur Entstehung von Lunkern im Lot kommen. Dabei handelt es sich in der Regel um gasförmige Einschlüsse oder Flußmitteleinschlüsse, die beim Erstarren des Lotes nicht aus der Schmelze des flüssigen Lotes entweichen konnten. Diese Fehlstellen können nachteilig für die Lötverbindung sein und behindern die Wärmeableitung aus Lötstellen beim Betrieb der gelöteten Komponenten. Aus diesem Grund ist es bei bestimmten Bauteilen notwendig, den Lunkeranteil in der Lötstelle klein zu halten.

Es ist bekannt, daß aus Flüssigkeiten Gasblasen entfernt werden können, indem ein Unterdruck angelegt wird. Ebenso verwendet man in der Metallographie Unterdruck , um Blasen aus der zähflüssigen Einbettmasse zu entfernen. Dasselbe Grundprinzip kann beim Löten Anwendung finden, indem im Bereich der flüssigen Lötverbindung ein Unterdruck erzeugt wird.

Die üblichen Reflow-Lötverfahren arbeiten typischerweise mit Strahlern oder einem heißen Gas zur Erwärmung des Lötgutes. Diese Lötverfahren haben aber den Nachteil einer langsamen Erwärmung größerer Massen und sind für das Löten von verdeckt liegenden Teilen weitgehend ungeeignet. Beim sogenannten Vakuumlöten werden diese Verfahren in Verbindung mit der Erzeugung eines Unterdrucks eingesetzt, um den Anteil der Leerstellen in der Lötverbindung klein zu halten.

Die Wärmeübertragung in einer kondensierenden Dampfphase (sogenanntes Dampfphasenlöten) ist besser geeignet, Lötgut zu erwärmen. Zum einen ist eine bessere Wärmeübertragung gewährleistet, zum anderen bestimmt die Temperatur des Dampfes die maximale Temperatur, die das Lötgut erfahren kann.

Eine Druckänderung im Zusammenhang mit Kondensationswärmeübertragung zu verwenden, ist bereits bekannt. Den Gesetzen der Thermodynamik folgend kann beispielsweise der Siedepunkt einer Flüssigkeit verändert werden, indem der Umgebungsdruck der Flüssigkeit verändert wird. Dieses Prinzip kommt in der US-A-4,392,049 und der DE-A-196 02 312 zur Anwendung. Durch Änderung des Umgebungsdrucks in einer geschlossenen Kammer wird dort die Siedetemperatur der Flüssigkeit verändert und somit die Temperatur des Dampfes gesteuert. Der direkte Einsatz einer Druckänderung in der Dampfphase ist allerdings dann problematisch, wenn man den großen Vorteil der Temperaturkonstanz beim Löten nutzen möchte. Gerade diese Eigenschaft bietet den Vorteil, daß ein automatischer, physikalisch bedingter Schutz gegen unerwünschte hohe Temperaturen gegeben ist.

Eine Lösung dieses Problems besteht darin, den Prozeß der Erwärmung in der Dampfphasenkammer stattfinden zu lassen und dann einen nachgeschalteten Unterdruckprozeß in einer Kammer durchzuführen, die sich außerhalb der Dampfphasenzone befindet. In der DE-A-199 11 887 ist eine entsprechende Vorrichtung beschrieben. Dabei erfolgt zum Löten die Wärmeübertragung durch Kondensation, und danach wird das schmelzflüssige Lötgut aus der Dampfkammer in eine angrenzende Kammer gefahren. Dort wird dann mit Hilfe einer sogenannten Vakuumglocke ein Unterdruck im Bereich der Lötstellen erzeugt, um die Einschlüsse im Lot entweichen zu lassen und möglichst lunkerfreie Lötstellen herzustellen. Dieser Verfahrensablauf ist allerdings mit wesentlichen Nachteilen verbunden. Wenn dieser Vakuumschritt nämlich nach dem Lötprozeß erfolgt, ergibt sich das Problem, daß das Lötgut solange schmelzflüssig gehalten werden muß, bis aufgrund eines zu erzeugenden Unterdrucks Fremdstoffe, die die Leerstellen bilden, aus der Lötstelle entweichen konnten. In der DE-A-199 11 887 wird dieses Problem dadurch gelöst, daß das Lötgut auf einem Träger sitzt, der eventuell beheizt werden kann. Dadurch soll die Wärmeabstrahlung des Lötgutes in die Umgebung kompensiert werden und die Lötstellen schmelzflüssig gehalten werden. Dies kann bei einfachen Teilen, die einen guten Flächenkontakt zum heißen Träger haben, funktionieren. Sobald die Teile aber komplexer werden oder die Zeit zum Evakuieren etwas länger wird, sind die Ergebnisse dieser Anordnung unbefriedigend. Um diesen Verfahrensnachteil zu kompensieren und eine unerwünscht frühe Erstarrung des Lotes zu verhindern, muß das Lötgut beim Ausfahren aus der Dampfphase einen möglichst hohen Temperaturunterschied zum Schmelzpunkt des verwendeten Lotes besitzen. Aus diesem Grund wird das Lötgut dabei um ca. 10-15°C über diese Schmelztemperatur erwärmt. Aus der Praxis sind auch noch höhere Temperaturen bekannt.

Die Problematik einer zu frühen Erstarrung des Lotes bringt zum einen Unsicherheiten für den Fertigungsprozeß mit sich, da bereits kleine Änderungen der Randbedingungen beim Evakuieren oder Zeitverzögerungen durch Störungen zu einer Verschlechterung des gewünschten Ergebnisses führen. Zum anderen werden durch die ausführungsbedingte Beschränkung des Zeitbereichs für das Einwirken des Unterdrucks die Möglichkeiten von Verfahrensvarianten wie z.B. wechselnde Druckverhältnisse etc. eingeschränkt oder unmöglich gemacht. Je höher die Temperatur des Lötgutes aber steigt, desto nachteiliger ist sie für die Qualität der Lötstellen und Materialien. Neben der Zunahme von Ablegiervorgängen ist es auch bekannt, daß höhere Temperaturen bei bleifreien Loten offensichtlich zur Zunahme der Leerstellen im Lot führen. So ist es aus verschiedenen Gründen wünschenswert, die Lötung bei Temperaturen durchzuführen, die nur geringfügig oberhalb der Schmelztemperatur des Lotes liegen.

Der Erfindung liegt die Aufgabe zugrunde, ein verbessertes Verfahren und eine verbesserte Vorrichtung zur Verfügung zu stellen, wobei Fehlstellen (Lunker) im Lot zuverlässig verhindert werden. Die Aufgabe wird mit den Merkmalen der Patentansprüche gelöst.

Die Erfindung ist in dem Verfahrenanspruch 1 und in dem Vorrichtunganspruch 16 definiert.

Bei der Lösung geht die Erfindung von dem Grundgedanken aus, in der Dampfphasenzone um das Lötgut herum einen Unterdruck zu erzeugen, wodurch das Lot ausgast. In einer bevorzugten erfindungsgemäßen Ausführungsform ist eine Unterdruck-(Evakuierungs)kammer vorgesehen, in die das Lötgut verbracht wird. Die Unterdruckkammer nimmt die Temperatur des Dampfes an, da sie sich in der Dampfphase befindet. Eine zusätzliche Heizung kann verwendet werden, ist aber nicht notwendig. Die Unterdruckkammer wird gegen die Dampfphase abgeschlossen, und das Gasvolumen wird aus ihr abgesaugt, um einen Unterdruck einer gewünschten Größenordnung zu erzeugen und Gaseinschlüsse aus dem Lot zu beseitigen.

Die Erfindung hat folgende Vorteile.

Da die Dampfphase die Unterdruckkammer umgibt, kann diese nicht abkühlen und wirkt deshalb als "Komplett-Strahler", der das Lötgut mit maximaler Temperatur der Dampfphase bestrahlt und somit sehr zuverlässig ein zu frühes Abkühlen des Lotes verhindert. Der Siedepunkt des die Dampfphase erzeugenden Mediums muß nur geringfügig über der Schmelztemperatur des Lotes liegen, da keine Temperaturreserve gegen ein unerwünscht frühes Abkühlen vorhanden sein muß. So genügt beispielsweise bereits ein Temperaturüberschuß von nur 5°C über der Schmelztemperatur des Lotes, um zuverlässig zu löten und anschließend Leerstellen zu beseitigen.

Im folgenden wird die Erfindung anhand der Zeichnungen näher erläutert. Es zeigen:
- Figur 1: einen vereinfachten Querschnitt durch eine erfindungsgemäße Ausführungsform, und
- Figur 2: das Lötgut gemäß Figur 1 in der geschlossenen Unterdruckkammer.

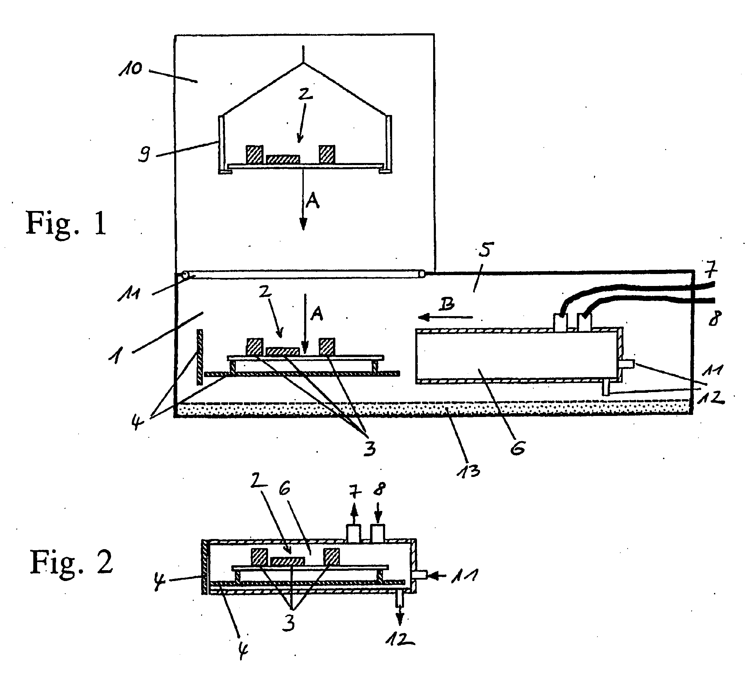

Figur 1 zeigt eine erste Kammer 5 mit einer Dampfphasenzone 1. Die Dampfphase wird durch das am Boden der Kammer 5 sichtbare flüssige Medium 13, das vorzugsweise eine inerte organische Flüssigkeit ist, erzeugt. In der Dampfphasenzone 1 befindet sich auf einer Ablage 4 Lötgut 2. In der Dampfphasenzone befindet sich weiterhin eine zweite Kammer 6 zum Erzeugen eines Unterdrucks um das Lötgut 2 herum. Das Lötgut 2 wird mittels eines Transportsystems 9 aus einer angrenzenden dritten Kammer 10 in Pfeilrichtung A in die Kammer 5 gefahren. Die Verbindung zwischen der ersten Kammer 5 und der dritten Kammer 10 wird von einem Kühlrohr 11 umgeben, das dafür sorgt, daß die Dampfphase in der ersten Kammer zurückgehalten wird und nicht in die Kammer 10 eintritt. Die zweite Kammer 6 zur Erzeugung des Unterdrucks wird in Pfeilrichtung B über die Ablage 4 mit dem Lötgut 2 gefahren, so daß die senkrechte Wand der Ablage 4 die zweite Kammer 6 abschließt. Danach erfolgt während einer vorbestimmten Zeit die Evakuierung der Kammer 6 über den Anschluß 7 auf einen vorbestimmten Unterdruck. Dann wird die zweite Kammer 6 wieder von der Ablage 4 mit dem Lötgut entfernt und das Transportsystem 9 nimmt das Lötgut 2 auf und fährt es aus der ersten Kammer 5 in die dritte Kammer 10. Von dort wird es zur weiteren Bearbeitung (nicht gezeigt) transportiert.

Wahlweise besteht die Möglichkeit, die Höhe der Dampfphase 1 zu verändern, um für eine vorbestimmte Zeit die Wärmeübertragung auf die in der Dampfphasenzone befindlichen Teile zu verringern. Es besteht auch die Möglichkeit, die Dampfphase 1 beim Schließen der Unterdruckkammer 6 kurzzeitig abzusenken und anschließend wieder anzuheben, so daß die Kammer 6 möglichst wenig Dampfphase enthält, wodurch das Evakuieren erleichtert wird. Außerdem kann die Kammer 6 mit dem Lötgut 2 bereits vor oder während des Schmelzvorgangs des Lotes geschlossen werden und dann die Wärme über die Strahlungswärme der Kammer 6 auf das Lötgut übertragen werden. In diesem Fall erfolgt die Wärmeübertragung durch diffuse Strahlung der Kammerwände. Die Evakuierung der Kammer 6 wird nach dem Schließen der Kammer mit einer Zeitverzögerung beginnen und auch mit einem sehr langsam ansteigenden Unterdruck beaufschlagt, da aufgrund des Aufenthalts in der Dampfhase nicht befürchtet werden muß, daß das Lot der Lötstellen vorzeitig erstarrt.

Die Unterdruckkammer kann wahlweise auch von oben auf das Lötgut abgesenkt werden (nicht dargestellt). In diesem Fall kann die Erwärmung über die Kammerwände verzögert erfolgen, wenn der obere Teil der Kammer sich nicht ständig oder nur unvollständig in der Dampfphase befindet und Strahlungswärme überwiegend über den unteren Teil der Kammer auf das Lötgut übertragen wird.

Figur 2 zeigt die Ablage 4 mit dem Lötgut 2 gemäß Figur 1, nachdem die zweite Kammer 6 gemäß Figur 1 in Pfeilrichtung B über die Ablage 4 und das Lötgut 2 geschoben und durch die senkrechte Wand der Ablage 4 verschlossen wurde.

Um zum Beispiel Flußmittelanteile bereits vor dem Schmelzen aus den Lötstellen zu entfernen, kann die Evakuierung der Kammer 6 mit dem Lötgut auch bereits vor dem Schmelzen des Lotes erfolgen. Anschließend wird dann ein Druckausgleich hergestellt und der Lötprozeß durchgeführt.

In der Unterdruckkammer 6 kann das Lötgut gereinigt oder anderweitig behandelt werden. Die Kammer 6 kann z.B. eine Vorrichtung zur Erzeugen eines Plasmas enthalten. Durch eine geeignete Plasmabehandlung des Lötgutes werden Verschmutzungen auf dem Lötsubstrat beseitigt und die Benetzungsfähigkeit wird erhöht. Plasmabehandlung kann sowohl vor dem Löten als auch während des Lötprozesses oder danach erfolgen. Wahlweise kann die Kammer 6 auch mit einem Überdruck beaufschlagt werden. Desweiteren kann das Lötgut mit einer Prozeßflüssigkeit behandelt werden, die zum Beispiel über den Anschluß 11 in die Kammer 6 eingeführt wird und über den Anschluß 12 aus der Kammer 6 wieder abgeführt wird. Durch die Prozeßflüssigkeit kann zum Beispiel eine Abkühlung des Lötgutes nach dem Löten oder eine Reinigung vorgenommen werden.

Nach dem Evakuieren durch die Leitung 7 kann der Druckausgleich mittels eines Schutzgases oder anderen Gases über die Leitung 8 erfolgen. Beim Druckausgleich kann das Lötgut gekühlt werden, indem das Gas die Kammer 6 länger als bis zum Druckausgleich nötig durchströmt.

## Patentansprüche

1. Verfahren zum Löten in der Dampfphase, wobei vor, während, und/oder nach dem Schmelzen des Lotes (3) auf dem Lötgut (2) in der Dampfphasenzone (1) um das Lötgut (2) herum ein Unterdruck erzeugt wird,
mit dem ersten Schritt:
(a) Einfahren des Lötgutes (2) in die Dampfphasenzone (1) zum Erwärmen des Lötgutes (2) in der Dampfphase,
gekennzeichnet mit diesen folgenden Schritten:
(b) Umschließen des Lötguts (2) mit einer Unterdruckkammer (6) in der Dampfphasenzone (1),
(c) Erzeugen eines Unterdrucks in der Unterdruckkammer (6) für eine vorbestimmte Zeit,
(d) Herstellen eines Druckausgleichs zwischen der Kammer (6) und der Dampfphasenzone (1),
(e) Entnahme des Lötguts (2) aus der Kammer (6) und aus der Dampfphasenzone (1).

2. Verfahren nach Anspruch 1, wobei das Schmelzen des Lotes (3) nach dem Schritt (a) erfolgt.

3. Verfahren nach Anspruch 1, wobei das Schmelzen des Lotes (3) nach dem Schritt (b) erfolgt.

4. Verfahren nach Anspruch 1, wobei das Schmelzen des Lotes (3) während des Schrittes (c) erfolgt.

5. Verfahren nach einem der Ansprüche 1 bis 4, wobei die Kammer (6) seitlich über das Lötgut (2) gefahren wird.

6. Verfahren nach einem der Ansprüche 1 bis 4, wobei die Kammer von oben auf das Lötgut (2) abgesenkt wird.

7. Verfahren nach Anspruch 6, wobei der obere Teil der Kammer außerhalb der Dampfphasenzone bleibt, so daß die Erwärmung des Lötguts (2) von oben geringer als von unten ist.

8. Verfahren nach einem der Ansprüche 1 bis 7, wobei die Höhe der Dampfphase (1) gesteuert verändert wird.

9. Verfahren nach Anspruch 8, wobei die Höhe der Dampfphase (1) beim Umschließen des Lötguts (2) durch die Kammer (6) unter das Niveau des Lötgutes kurzzeitig oder länger abgesenkt und danach wieder angehoben wird.

10. Verfahren nach einem der Ansprüche 1 bis 9, wobei die Erzeugung des Unterdrucks verzögert erfolgt.

11. Verfahren nach einem der Ansprüche 1 bis 10, wobei der Druckausgleich mittels eines Schutzgases erfolgt.

12. Verfahren nach Anspruch 11, wobei das Schutzgas das Lötgut (2) kühlt.

13. Verfahren nach einem der Ansprüche 1 bis 12, wobei anstelle des Schrittes (d) in der Kammer (6) ein Überdruck erzeugt wird.

14. Verfahren nach einem der Ansprüche 1 bis 13, wobei in der Kammer (6) eine zusätzliche Reinigung des Lötgutes (2) in einem Plasma erfolgt.

15. Verfahren nach einem der Ansprüche 1 bis 14, wobei in der Kammer (6) eine Wärmebehandlung oder Reinigung des Lötgutes (2) mit einer Prozeßflüssigkeit erfolgt.

16. Vorrichtung zum Löten in der Dampfphasenzone (1) mit:
(a) einer ersten Kammer (5), in der sich die Dampfphasenzone (1) und eine Ablage (4) für das Lötgut (2) befindet,
(b) einer zweiten Kammer (6), in der Unterdruck erzeugt werden kann, wobei die zweite Kammer (6) über das Lötgut (2) fahrbar ist oder das Lötgut (2) in die zweite Kammer (6) einfahrbar ist,
(c) Einrichtungen (7, 8) zum Absenken und zum Erhöhen des Drucks in der zweiten Kammer (6),
(d) einem Transportsystem (9) zum Fahren des Lötgutes (2) in die erste Kammer (5) und aus der ersten Kammer (5). **dadurch gekennzeichnet, daß** die zweite Kammer (6) sich in der Dampfphasenzone der ersten Kammer befindet oder in diese einfahrbar ist.

17. Vorrichtung nach Anspruch 16 mit einer dritten Kammer (10), die in Verbindung mit der ersten Kammer (5) steht und durch die das Transportsystem (9) hindurchgeht.

18. Vorrichtung nach Anspruch 17, wobei die Verbindung der ersten Kammer (5) mit der dritten Kammer (10) von einem Kühlrohr (11) umgeben ist, um die Dampfphase (1) in der ersten Kammer (5) zurückzuhalten.

19. Vorrichtung nach Anspruch 16, 17 oder 18, wobei die zweite Kammer (6) Einrichtungen (11, 12) zum Zuführen und Abführen eines Schutzgases oder einer Prozeßflüssigkeit aufweist.

20. Vorrichtung nach einem der Ansprüche 16 bis 19, wobei in der zweiten Kammer (6) eine Einrichtung zum Erzeugen eines Plasmas vorgesehen ist.

## Claims

1. A process for soldering in the vapor phase, wherein before, while and/or after melting the solder (3) on the item to be soldered (2) a vacuum is generated around the item to be soldered (2) in the vapor phase zone (1), comprising the first step of
(a) transporting the item to be soldered (2) into the vapor phase zone (1) for heating the item to be soldered (2) in the vapor phase,
**characterized by** the following steps of
(b) enclosing the item to be soldered (2) by means of a vacuum chamber (6) in the vapor phase zone (1),
(c) generating a vacuum in the vacuum chamber (6) for a predetermined time,
(d) compensating the pressure between the chamber (6) and the vapor phase zone (1),
(e) removing the item to be soldered (2) from the chamber (6) and the vapor phase zone (1).

2. The process according to claim 1, wherein the solder (3) is molten after step (a).

3. The process according to claim 1, wherein the solder (3) is molten after step (b).

4. The process according to claim 1, wherein the solder (3) is molten during step (c).

5. The process according to any one of claims 1 to 4, wherein the chamber (6) is moved laterally across the item to be soldered (2).

6. The process according to any one of claims 1 to 4, wherein the chamber is lowered from the top onto the item to be soldered (2).

7. The process according to claim 6, wherein the upper part of the chamber remains outside the vapor phase zone so that the item to be soldered (2) is heated less from the top than from the bottom.

8. The process according to any one of claims 1 to 7, wherein the height of the vapor phase (1) is varied in a controlled manner..

9. The process according to claim 8, wherein the height of the vapor phase (1) is lowered below the level of the item to be soldered for a short or long time period and then risen again while the chamber (6) encloses the item to be soldered (2).

10. The process according to any one of claims 1 to 9, wherein the generation of the vacuum is delayed.

11. The process according to any one of claims 1 to 10, wherein the pressure is compensated by means of an inert gas.

12. The process according to claim 11, wherein the inert gas cools the item to be soldered (2).

13. The process according to any one of claims 1 to 12, wherein an overpressure is generated in the chamber (6) instead of step (d).

14. The process according to any one of claims 1 to 13, wherein the item to be soldered (2) is additionally cleaned in a plasma in the chamber (6).

15. The process according to any one of claims 1 to 14, wherein the item to be soldered (2) is heat treated or cleaned by means of a process fluid in the chamber (6).

16. A device for soldering in the vapor phase zone (1) comprising:
(a) a first chamber (5) in which the vapor phase zone (1) and a support (4) for the item to be soldered (2) are located,
(b) a second chamber (6) in which the vacuum can be generated, wherein the second chamber (6) can be moved over the item to be soldered (2) or the item to be soldered (2) can be moved into the second chamber (6),
(c) means (7, 8) for lowering and rising the pressure in the second chamber (6),
(d) a transporting system (9) for transporting the item to be soldered (2) into the first chamber (5) and out of the first chamber (5),
**characterized in that** the second chamber (6) is located in the vapor phase zone of the first chamber or can be moved into the first chamber.

17. The device according to claim 16, comprising a third chamber (10) which communicates with the first chamber (5) and through which the transporting system (9) extends.

18. The device according to claim 17, wherein the connection between the first chamber (5) and the third chamber (10) is surrounded by a cooling tube (11) in order to retain the vapor phase (1) in the first chamber (5).

19. The device according to claim 16, 17 or 18, wherein the second chamber (6) comprises means (11, 12) for supplying and discharging an inert gas or a process fluid.

20. The device according to any one of claims 16 to 19, wherein a means for generating a plasma is provided in the second chamber (6).

## Revendications

1. Procédé de soudage en phase vapeur, dans lequel une dépression est produite autour du produit à souder (2) avant, pendant, et/ou après la fusion de l'alliage de soudure (3) sur le produit à souder (2) dans la zone de phase vapeur,
comportant une première étape consistant à :
(a) insérer le produit à souder (2) dans la zone de phase vapeur (1) afin d'échauffer le produit à souder (2) en phase vapeur,
**caractérisé par** les étapes ci-dessous, consistant à :
(b) enfermer le produit à souder (2) avec une chambre à dépression (6) dans la zone de phase vapeur (1),
(c) produire une dépression dans la chambre à dépression (6) pendant un temps prédéterminé,
(d) produire un équilibrage de pression entre la chambre (6) et la zone de phase vapeur (1),
(e) extraire le produit à souder (2) de la chambre (6) et de la zone de phase vapeur (1).

2. Procédé selon la revendication 1, dans lequel la fusion de l'alliage de soudure (3) a lieu après l'étape (a).

3. Procédé selon la revendication 1, dans lequel la fusion de l'alliage de soudure (3) a lieu après l'étape (b).

4. Procédé selon la revendication 1, dans lequel la fusion de l'alliage de soudure (3) a lieu pendant l'étape (c).

5. Procédé selon l'une quelconque des revendications 1 à 4, dans lequel la chambre (6) est amenée latéralement sur le produit à souder (2).

6. Procédé selon l'une quelconque des revendications 1 à 4, dans lequel la chambre est descendue par le haut sur le produit à souder (2).

7. Procédé selon la revendication 6, dans lequel la partie supérieure de la chambre reste à l'extérieur de la zone de phase vapeur, de sorte que l'échauffement du produit à souder (2) par le haut est plus faible que par le bas.

8. Procédé selon l'une quelconque des revendications 1 à 7, dans lequel la hauteur de la phase vapeur (1) est modifiée de manière contrôlée.

9. Procédé selon la revendication 8, dans lequel la hauteur de la phase vapeur (1) est abaissée brièvement ou de manière prolongée sous le niveau du produit à souder lors de l'enfermement du produit à souder (2) par la chambre (6), et est ensuite élevée à nouveau.

10. Procédé selon l'une quelconque des revendications 1 à 9, dans lequel la production de la dépression a lieu de manière retardée.

11. Procédé selon l'une quelconque des revendications 1 à 10, dans lequel l'équilibrage de pression a lieu grâce à un gaz de protection.

12. Procédé selon la revendication 11, dans lequel le gaz de protection refroidit le produit à souder (2).

13. Procédé selon l'une quelconque des revendications 1 à 12, dans lequel une surpression est produite dans la chambre (6) à la place de l'étape (d).

14. Procédé selon l'une quelconque des revendications 1 à 13, dans lequel un nettoyage supplémentaire du produit à souder (2) a lieu dans un plasma dans la chambre (6).

15. Procédé selon l'une quelconque des revendications 1 à 14, dans lequel un traitement thermique ou un nettoyage du produit à souder (2) a lieu dans la chambre (6) avec un liquide de procédé.

16. Dispositif pour le soudage dans la zone de phase vapeur (1) comprenant :
(a) une première chambre (5), dans laquelle se trouve la zone de phase vapeur (1) et un emplacement de dépôt (4) pour le produit à souder (2),
(b) une deuxième chambre (6), dans laquelle une dépression peut être produite, la deuxième chambre (6) pouvant être amenée sur le produit à souder (2) ou le produit à souder (2) pouvant être introduit dans la deuxième chambre (6),
(c) des dispositifs (7, 8) pour abaisser et pour augmenter la pression dans la deuxième chambre (6),
(d) un système de transport (9) pour déplacer le produit à souder (2) dans la première chambre (5) et hors de la première chambre (5),
**caractérisé en ce que** la deuxième chambre (6) se trouve dans la zone de phase vapeur de la première chambre ou peut être introduite dans celle-ci.

17. Dispositif selon la revendication 16 comprenant une troisième chambre (10), qui est en liaison avec la première chambre (5) et que le système de transport (9) traverse.

18. Dispositif selon la revendication 17, dans lequel la liaison de la première chambre (5) avec la troisième chambre (10) est entourée d'un tube de refroidissement (11), pour retenir la phase vapeur (1) dans la première chambre (5).

19. Dispositif selon l'une quelconque des revendications 16, 17 ou 18, dans lequel la deuxième chambre (6) présente des dispositifs (11, 12) pour amener ou extraire un gaz de protection ou un liquide de procédé.

20. Dispositif selon l'une quelconque des revendications 16 à 19, dans lequel un dispositif destiné à la production d'un plasma est prévu dans la deuxième chambre (6).
